# EUROPEAN PATENT APPLICATION

(11) **EP 4 710 762 A1**
(43) Date of publication of application: **18.03.2026**
(21) Application number: 24200070.1
(22) Date of filing: 12.09.2024
(51) Int. Cl.: A01M 7/00, A01N 25/02, B05B 1/00

(54) **METHOD FOR IMPROVING AGRICULTURAL SPRAY UNIFORMITY**

(71) Applicant: Syngenta Crop Protection AG, 4058 Basel (CH)
(72) Inventor: The designation of the inventor has not yet been filed
(74) Representative: SYNGENTA IP

(57) **Abstract**

A method for improving uniformity of an agricultural spray comprising spraying the agricultural spray through an agricultural spray nozzle having a spray angle of 65° or less. The agricultural spray comprises an active ingredient such as a pesticide, an adjuvant composition and a carrier fluid such as water.

## Description

### Technical Field

This invention relates generally to pesticidal compositions. More specifically, although not exclusively, this invention relates to improvements in spraying of pesticidal compositions.

### Background

Crop protection techniques typically comprise the use of pesticidal sprays, such as herbicidal, insecticidal, or fungicidal compositions for reducing unwanted weed, insect, or fungus growth. These compositions are typically aqueous solutions comprising one or more active components, as well as a number of adjuvants for improving effectiveness of the composition. The adjuvants themselves are typically not pesticidal but work synergistically with the composition to improve the efficacy.

Historically, pesticides have been applied widely across large areas of land to improve crop yields through specialist crop spraying equipment. Due to both regulatory pressure as well as financial considerations for farmers, it is desirable to minimise the use of pesticides and untargeted techniques. In precision spraying processes, such as banded or spot spraying, targeted areas are sprayed directly without requiring the entire field be sprayed with the pesticide, such as in broadcast spraying.

In precise application techniques, the use of single nozzles can lead to an uneven application of the Crop Protection (CP) products across the targeted area. This is compounded by the effect of crosswinds, which can lead to sprays becoming fully or partially off-target (termed microdrift). This means that weeds may receive a lower than intended dosage of the CP product and could result in increased pesticidal resistance.

Uneven application of pesticidal compositions, especially within precise application techniques, could be addressed through further development of spray nozzles or through modification of the spray composition.

It would therefore be advantageous to provide an adjuvant for a pesticidal composition which mitigates or ameliorates one or more of the above problems.

### Summary of Invention

Accordingly, a first aspect of the invention provides a method for improving uniformity of an agricultural spray. The method may comprise spraying the agricultural spray through an agricultural spray nozzle. The agricultural spray may comprise an active ingredient. The agricultural spray may comprise an adjuvant composition. The agricultural spray may comprise a carrier fluid. The agricultural spray nozzle may have a spray angle of 65° or less.

The agricultural spray nozzle may be selected from the group comprising: flat fan nozzles; pre-orifice nozzles; and air induction (Venturi) nozzles. The flat fan nozzles may comprise standard flat fan, even flat fan, and deflector nozzles.

The agricultural spray nozzle has a spray angle of 65° or less. In some embodiments, the agricultural spray nozzle has a spray angle of 60°, 55°, 50°, 45°, or 40° or less. In a preferred series of embodiments, the agricultural spray nozzle has a spray angle of 40°.

Spraying the agricultural spray may comprise non-broadcast spraying. Spraying the agricultural spray may comprise precision application spraying techniques. Spraying the agricultural spray may comprise banded or spot application of the agricultural spray.

In some embodiments, the spot application comprises a spray of 1 metre or less in length. By length it is intended to refer to the direction in which the agricultural spray nozzle is travelling. The spot application width is determined by the spray angle and height of the nozzle utilised.

The agricultural spray may comprise: 0.01-1% w/w of the adjuvant composition. The agricultural spray may comprise 0.1-0.9% w/w, 0.2-0.8% w/w, 0.3-0.7% w/w, 0.5-0.6% w/w, or 0.5% w/w of the adjuvant composition.

In one series of embodiments, the adjuvant composition may comprise 10-60% w/w of a mixture comprising an ethoxylated alcohol and glycerol polyethyleneglycol ricinoleate. The adjuvant composition may comprise 40-90% w/w of unsaturated fatty acids.

In some embodiments, the adjuvant composition may comprise 15-55% w/w, 20-50% w/w, 25-45% w/w, 30-40% w/w, or 35% w/w of a mixture comprising an ethoxylated alcohol and glycerol polyethyleneglycol ricinoleate.

The ethoxylated alcohol may comprise C₆₋₁₄EO₁₋₁₀. The ethoxylated alcohol may have the formula C₇₋₁₃EO₃₋₉, C₈₋₁₂EO₄₋₈, C₉₋₁₁EO₅₋₇. The ethoxylated alcohol may have the formula C₆EO₁₋₁₀, C₇EO₁₋₁₀, C₈EO₁₋₁₀, C₉EO₁₋₁₀, C₁₀EO₁₋₁₀, C₁₁EO₁₋₁₀, C₁₂EO₁₋₁₀, C₁₃EO₁₋₁₀, or C₁₄EO₁₋₁₀. The ethoxylated alcohol may have the formula C₆₋₁₄EO₁, C₆₋₁₄EO₂, C₆₋₁₄EO₃, C₆₋₁₄EO₄, C₆₋₁₄EO₅, C₆₋₁₄EO₆, C₆₋₁₄EO₇, C₆₋₁₄EO₈, C₆₋₁₄EO₉, or C₆₋₁₄EO₁₀. In one series of embodiments, the ethoxylated alcohol may be C₁₀EO₆.

The glycerol polyethyleneglycol ricinoleate may have the formula: 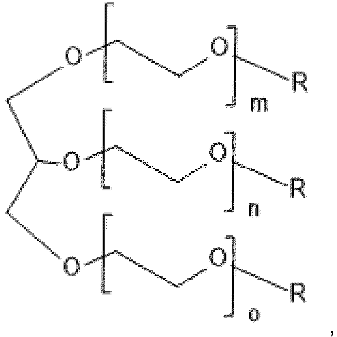 wherein
m = 20 to 30, n = 10 to 25, and o = 1 to 10. `m' may = 22-28, 24-26, or 25. In one series of embodiments m = 24. `n' may = 12-24, 14-22, 16-20, or 17-19. In one series of embodiments n = 17. 'o' may = 2-9, 3-8, 4-7, 5-6. In one series of embodiments, o = 4. The R group may have the structure:

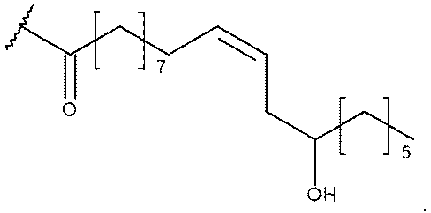

In a further series of embodiments, the adjuvant composition may comprise 40-60% w/w of soybean phospholipids. The adjuvant composition may comprise 15-35% w/w of ethoxylated alcohol. The adjuvant composition may comprise 15-35% w/w of unsaturated fatty acids.

The adjuvant composition may comprise 40-60% w/w, 42-58% w/w, 44-56% w/w, 45-55% w/w, 46-54% w/w, 48-52% w/w, or 50% w/w of soybean phospholipids.

The soybean phospholipids may comprise soy lecithin. The soybean phospholipids may comprise one or more of glycerophospholipids including phosphatidylcholine, phosphatidylethanolamine, phosphatidylinositol, phosphatidylserine, and phosphatidic acid. In one series of embodiments, the soybean phospholipids comprise phosphatidylcholine and triglycerides.

The adjuvant composition may comprise 15-35% w/w of ethoxylated alcohol. The ethoxylated alcohol may comprise C₆₋₁₄EO₁₋₄. The ethoxylated alcohol may have the formula C₆EO₁₋₄, C₇EO₁₋₄, C₈EO₁₋₄, C₉EO₁₋₄, C₁₀EO₁₋₄, C₁₁EO₁₋₄, C₁₂EO₁₋₄, C₁₃EO₁₋₄, or C₁₄EO₁₋₄. The ethoxylated alcohol may have the formula C₆₋₁₄EO₁, C₆₋₁₄EO₂, C₆₋₁₄EO₃, or C₆₋₁₄EO₄. In one series of embodiments, the ethoxylated alcohol comprises ethoxylated undecan-1-ol. In one series of embodiments, the ethoxylated alcohol comprises C₁₁EO₂.

The adjuvant composition may comprise 15-35% w/w of unsaturated fatty acids. The adjuvant composition may comprise 16-34% w/w, 18-32% w/w, 20-30% w/w, 22-28 % w/w, 24-26% w/w or 25% w/w of unsaturated fatty acids. The unsaturated fatty acids may comprise an esterified vegetable oil.

The adjuvant composition may further comprise one or more of: surfactants, emulsifiers, stabilisers, coagulant, and thickeners.

The agricultural spray may comprise 0.001 to 2 wt% of the active ingredient. The agricultural spray may comprise 0.01-1.9% w/w, 0.1-1.8% w/w, 0.2-1.7% w/w,0.3-1.6% w/w, 0.4-1.5% w/w, 0.5-1.4% w/w, 0.6-1.3% w/w, 0.7-1.2% w/w, 0.8-1.1% w/w, or 0.9-1 % w/w of the active ingredient. The active ingredient may be a pesticidal composition.

The pesticidal composition may comprise one or more of: herbicides, insecticides, fungicides, or other biological agents. The pesticidal composition may comprise one or more of 2,4-dichlorophenoxyacetic acid (2,4-D), aldrin/dieldrin, atrazine, chlordane, chlordecone, DDT, DDE, DDD, endosulfan, endrin, glyphosate, heptachlor/heptachlor epoxide, hexachlorobenzene, methoxychlor, methylene chloride, pentachlorophenol, polychlorinated biphenyls (PCBS), toxaphene, pyrethrins and pyrethroids. In one series of embodiments, the pesticidal composition comprises a herbicidal composition selected from the group comprising: pre-emergent herbicides, post-emergent herbicides, selective herbicides, non-systemic herbicides, and systemic herbicides. The herbicidal composition may comprise glufosinate and/or glufosinate ammonium.

The carrier fluid may comprise water. Alternatively, the carrier fluid may comprise an organic liquid.

The agricultural spray may further comprise one or more of plant growth regulators, fertiliser or mixtures of such materials.

The active ingredient in the agricultural spray may be formulated as a liquid (dissolved and/or dispersed in water, dissolved or dispersed in a suitable organic liquid) or as a solid such as a wettable powder, dispersible granule or soluble granule. The formulated product is then diluted in a carrier fluid for spray application to the target. The formulation typically also comprises various dispersants, surfactants and other adjuvants to improve the biological activity of the product.

The agricultural nozzles that may be used to spray the agricultural sprays of the present disclosure may vary in size, shape, material, and other characteristics. Examples of agricultural nozzles that may be used include drift reduction nozzles, such as nozzles that produce flat fan sprays. Agricultural nozzles may include those manufactured by AgroTop (SpotFan 40 03, RowFan 40 03), TeeJet (TP 40 04, TP 40 03E, TP 40 03, TP 40 02E, DG 4003), Hypro, Greenleaf, Wilger (ComboJet MR 40 04, ComboJet DX40 03), Lechler (ARE 30 02, ARE 30 02, ARE 30 015, 40 03, LS 20 005, IDK 90 04C), and MagnoJet (APS 60 02, APS 30 03, APS 30 02, APS 30 01). For instance, TeeJet nozzle models include as AIXR, Al, TT, TP and so on. The nozzle classifications for the agricultural nozzles that may be used to spray the agricultural sprays include but are not limited to: extremely fine (XF), with a VMD less than 60 µm; very fine (VF), with a VMD between 61 - 105 µm; fine (F), with a VMD between 106 - 235 µm; medium (M), with a VMD between 236 - 340 µm; coarse (C), with a VMD between 341 - 403 µm; very coarse (VC), with a VMD between 404 - 502 µm; extremely coarse (EC), with a VMD between 503 - 665 µm; and ultra-coarse (UC), with a VMD greater than 665 µm, according to the ASABE S572.1 standard. In some embodiments, the method comprises spraying through a medium or coarse agricultural nozzle.

The above-described system may be used to spray any crop protection agent on a corresponding "plant" or pre-crop emergence. "Plant" encompasses both useful plants such as crops and unwanted plants such as weeds. Large numbers of both crops and weeds will be familiar to those in the crop protection agent field. Examples of plants include crops such as cereals, for example barley and wheat, cotton, oilseed rape, sunflower, maize, rice, soybeans, sugar beet, sugar cane and potato. Crop plants can also include trees, such as fruit trees, palm trees, coconut trees or other nuts. Also included are vines such as grapes, fruit bushes, fruit plants and vegetables. Other useful plants include turf grass for example in golf-courses, lawns, parks and roadsides, or grown commercially for sod, and ornamental plants such as flowers or bushes. Examples of plants also include monocotyledonous and dicotyledonous weed species. Examples of monocotyledonous species include Alopecurus myosuroides, Avena fatua, Brachiaria plantaginea, Bromus tectorum, Cyperus esculentus, Digitaria sanguinalis, Echinochloa crus-galli, Lolium perenne, Lolium multiflorum, Panicum miliaceum, Poa annua, Setaria viridis, Setaria faberi and Sorghum bicolor. Examples of dicotyledonous weed species include Abutilon theophrasti, Amaranthus retroflexus, Bidens pilosa, Chenopodium album, Euphorbia heterophylla, Galium aparine, Ipomoea hederacea, Kochia scoparia, Polygonum convolvulus, Sida spinosa, Sinapis arvensis, Solanum nigrum, Stellaria media, Veronica persica and Xanthium strumarium.

The invention is described with reference to the following non-limiting Examples.

### Experiments and Examples

### Testing method

The 'footprint' of a spray is the width of the spray emitted at the targeted application height. The uniformity of this footprint is key in ensuring a targeted pest gets a sufficient dose of pesticide. A system was thus developed to evaluate the uniformity of sprays emitted from various nozzles and/or spray systems. Firstly, a series of example compositions 1 to 9 were prepared according to the formulations shown in Table 2 below. The compositions are all provided with a measurable fluorescent tracer at 0.1% w/w(not shown in Table 2). The tracer was measured using a fluorimeter. Composition 1, consisting of only water and the tracer was used as a control. In a wind tunnel, an artificial target was sprayed with the different compositions using various nozzles under a fixed set of spray application conditions: a boom speed of 10 km/h, a nozzle height of 40 cm, and an application pressure of 3 bar (300kPa).

Once sprayed, the artificial target was divided into smaller sections whereby the quantity of tracer was measured. The artificial target was divided into 5x5 cm squares and a swath width (i.e. transverse to the direction of travel of the spray nozzle) of 25cm was targeted (as shown in Table 1, whereby the arrow denotes direction of travel). The amount of tracer present in the 5 central squares forming the targeted footprint was measured, and squares beyond this region were ignored. The measurement values from the artificial target were normalized between 1 and 0.

Table 1 shows the measured region for determining uniformity of footprint and direction of travel.

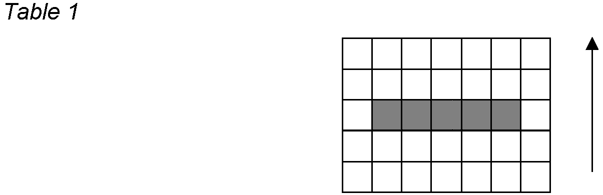

The targeted swath width at the predetermined application height is then used to pick out the centred sections of the footprint. In the experiments below, a footprint width of 25 cm was targeted. The five central transverse squares of the target relative to the direction of travel were used to calculate the mean average and standard deviation of the footprint. A mean average close to 1 indicates a highly uniform footprint - a value of 1 means that the five central squares all had the same quantity of the tracer present. Similarly, a low standard deviation indicates a more even footprint since there is less variation in the amount of tracer in the five central squares.

Table 2 provides a list of compositions tested in the Examples.

**Table 2**

| **Composition No.** | **w/w % Composition** | | | | | | | | | |
|---|---|---|---|---|---|---|---|---|---|---|
| | **Ethoxylated alcohol** | | **Glycerol polyethylene glycol ricinoleate** | **Soybean phospholipids** | **Unsaturated fatty acids** | **Guar gum** | **Propylene oxide-ethylene oxide copolymer** | **Sodium carbonate** | **Total adjuvant / w/w %** | **Water** |
| | **C₁₁EO₂** | **C₁₀EO₆** | | | | | | | | |
| 1 | 0 | 0 | 0 | 0 | 0 | 0 | 0 | 0 | 0 | up to 100 |
| 2 | 0 | 0.00875 | | 0 | 0.01575 | 0 | 0 | 0 | 0.02 | up to 100 |
| 3 | 0 | 0.04375 | | 0 | 0.07875 | 0 | 0 | 0 | 0.12 | up to 100 |
| 4 | 0 | 0.065625 | | 0 | 0.118125 | 0 | 0 | 0 | 0.18 | up to 100 |
| 5 | 0 | 0.0875 | | 0 | 0.1575 | 0 | 0 | 0 | 0.25 | up to 100 |
| 6 | 0 | 0.175 | | 0 | 0.315 | 0 | 0 | 0 | 0.49 | up to 100 |
| 7 | 0.125 | 0 | 0 | 0.25 | 0.125 | 0 | 0 | 0 | 0.50 | up to 100 |
| 8 | 0 | 0 | 0 | 0 | 0 | 0.027 | 0.0021 | 0.0009 | 0.03 | up to 100 |
| 9 | 0 | 0 | 0 | 0 | 0 | 0.054 | 0.0042 | 0.0018 | 0.06 | up to 100 |

### Example 1 - Initial tests

A first series of tests was carried out using Compositions 1 to 6. Compositions 2 to 5 all comprise increasing concentrations of an adjuvant composition comprising C₁₀EO₆ and glycerol polyethylene glycol ricinoleate (35.7 wt%), and unsaturated fatty acids (64.3 wt%) (Accudrop^{®} sourced from WinField United, a commercially available drift reduction adjuvant). The Compositions 1 to 6 were each sprayed through a coarse pre-orifice nozzle having a spray angle of 40° and a flow rate of 0.3 gallons per hour at 40psi. Composition 1 was used as a control.

**Table 3**

| **Example no.** | **Composition no.** | **Nozzle** | **Wind speed /mph** | **Mean average** | **Standard deviation** |
|---|---|---|---|---|---|
| **1.1** | 1 | Agrotop SpotFan 40 03 | 0 | 0.74 | 0.19 |
| **1.2** | 2 | | | 0.69 | 0.03 |
| **1.3** | 3 | | | 0.82 | 0.11 |
| **1.4** | 4 | | | 0.86 | 0.09 |
| **1.5** | 5 | | | 0.85 | 0.11 |
| **1.6** | 6 | | | 0.88 | 0.10 |

As shown in Table 3, the Example Compositions 2 to 6 all show significant improvements compared to the Control Composition 1. Although the mean average for Composition 2 was lower in Example 1.2, it had the lowest standard deviation which indicated a highly uniform spray footprint across the five central squares of the target. Increasing the concentration of the adjuvant composition lead to an increase in the mean average across the central five squares while also maintaining a consistently low standard deviation, thus demonstrating a progressively improved footprint and increasing uniformity as the concentration of the adjuvant composition increased.

**Table 4**

| **Example no.** | **Composition no.** | **Nozzle** | **Wind speed /mph** | **Mean average** | **Standard deviation** |
|---|---|---|---|---|---|
| **1.7** | 1 | Agrotop SpotFan 40 03 | 10 | 0.71 | 0.36 |
| **1.8** | 2 | | | 0.69 | 0.29 |
| **1.9** | 5 | | | 0.79 | 0.31 |
| **1.10** | 6 | | | 0.64 | 0.30 |

The tests were then repeated using Compositions 1, 2, 5 and 6 with a wind speed of 10mph. As expected, the increased wind speed causes a reduction in the mean average and increase in the standard deviation for all of the examples, showing that the footprint has become less uniform due to the wind. Nonetheless, adjuvant Compositions 2, 5, & 6 all have a lower standard deviation than the control, showing that even in windy conditions, the compositions act as drift reducing agents which maintain the evenness and uniformity of the footprint.

### Example 2 - Alternative nozzles

The tests of Example 1 were repeated using an alternative nozzle, the TeeJet 40 03E, which is an even flat fan nozzle with a medium spray classification at 3 bar. As in Example 1, the nozzle has a spray angle of 40° and a flow rate of 0.3 gallons per hour (at 40psi).

**Table 5**

| **Example no.** | **Composition no.** | **Nozzle** | **Wind speed /mph** | **Mean average** | **Standard deviation** |
|---|---|---|---|---|---|
| **2.1** | 1 | TeeJet 40 03 E | 0 | 0.92 | 0.11 |
| **2.2** | 2 | | | 0.93 | 0.06 |
| **2.3** | 3 | | | 0.93 | 0.06 |
| **2.4** | 4 | | | 0.92 | 0.10 |
| **2.5** | 5 | | | 0.87 | 0.10 |
| **2.6** | 6 | | | 0.88 | 0.08 |
| **2.7** | 1 | | 10 | 0.69 | 0.32 |
| **2.8** | 2 | | | 0.89 | 0.10 |
| **2.9** | 5 | | | 0.82 | 0.17 |
| **2.10** | 6 | | | 0.87 | 0.16 |
| **2.11** | 1 | Wilger ComboJet MR 40 04 | 0 | 0.80 | 0.35 |
| **2.12** | 5 | | | 0.85 | 0.31 |

As shown in Examples 2.1 to 2.6, Compositions 2 to 6 maintained the uniformity of the footprint compared to the Control Composition 1 - the mean averages were consistent with the control, with only a very modest improvement in the standard deviation. In Examples 2.7 to 2.10, the use of the adjuvant composition causes a much greater improvement in both mean average and standard deviation when in the presence of wind at all three concentrations tested.

Without wishing to be bound by theory, it is understood that the selected nozzle inherently provides a highly uniform footprint but is also highly susceptible to drift when in the presence of wind. Thus, the effects of the adjuvant composition were masked for the tests carried out with no wind, since the uniform spray left little room for improvement. However, under windy conditions the improvement in uniformity due to the use of the adjuvant composition was clear in the results.

In Examples 2.11 - 2.12, a coarse pre-orifice flat fan nozzle with a spray angle of 40° and a flow rate of 0.4 gallons per hour at 40psi was installed and the windless test repeated with the Control Composition 1 and with Composition 5. The use of the adjuvant Composition 5 is shown to improve both the mean average and standard deviation i.e. demonstrating an improved uniformity across the spray footprint compared to water alone.

### Example 3 - Further compositions

The tests were then repeated using the Agrotop SpotFan 40 03, both under no wind and a wind speed of 10 mph, using control composition 1 and the adjuvant composition 7. Composition 7 comprises 0.25 wt% soybean phospholipids, 0.125wt% C₁₁EO₂, and 0.125 wt% unsaturated fatty acids, with the remainder comprising water (Validate^{™} sourced from DeSangosse, a commercially available drift reduction adjuvant). Lastly, the nozzle was changed for a TeeJet 40 03 E and the test repeated without wind.

**Table 6**

| **Example no.** | **Composition no.** | **Nozzle** | **Wind speed /mph** | **Mean average** | **Standard deviation** |
|---|---|---|---|---|---|
| **3.1** | 1 | Agrotop SpotFan 40 03 | 0 | 0.74 | 0.19 |
| **3.2** | 7 | | | 0.81 | 0.16 |
| **3.3** | 1 | | 10 | 0.71 | 0.36 |
| **3.4** | 7 | | | 0.78 | 0.30 |
| **3.5** | 1 | TeeJet 40 03 E | 0 | 0.92 | 1 |
| **3.6** | 7 | | | 0.87 | 0.10 |
| **3.7** | 1 | | 10 | 0.69 | 0.32 |
| **3.8** | 7 | | | 0.82 | 0.16 |

In all test conditions, the use of the adjuvant composition results in a significant improvement in uniformity of the spray footprint. The improvement in uniformity between Examples 3.5 to 3.8 is particularly promising, since (as noted above) the TeeJet 4003E provides a highly uniform spray at low or no wind speeds but is susceptible to drift, thus demonstrating the effectiveness of Composition 7 as a drift reduction adjuvant. The spray uniformity between examples 3.6 and 3.8 (i.e. at wind speeds of 0 and 10mph) had changed only minimally.

### Examples 4 & 5 - Comparative compositions

The above tests were then repeated using Compositions 8 and 9, as set out in Tables 7 and 8 below. Compositions 8 and 9 comprise polymeric compounds: guar gum and propylene oxide-ethylene oxide copolymer, in addition to a small amount of sodium carbonate. Compositions 8 and 9 had total concentrations of 0.03 wt% and 0.06 wt% respectively.

**Table 7**

| **Example no.** | **Composition no.** | **Nozzle** | **Wind speed /mph** | **Mean average** | **Standard deviation** |
|---|---|---|---|---|---|
| **4.1** | 1 | Agrotop SpotFan 40 03 | 0 | 0.74 | 0.19 |
| **4.2** | 8 | | | 0.71 | 0.25 |
| **4.3** | 9 | | | 0.49 | 0.32 |
| **4.4** | 1 | | 10 | 0.71 | 0.36 |
| **4.5** | 8 | | | 0.60 | 0.35 |
| **4.6** | 9 | | | 0.48 | 0.36 |

As shown in Table 7, the use of Compositions 8 and 9 negatively affected the spray footprint uniformity both with no wind and when tested at a wind speed of 10 mph. As shown by the significant drop in mean average between examples 4.2 and 4.3, and between 4.5 and 4.6, increasing the concentration of the composition worsened the effect on the footprint.

**Table 8**

| **Example no.** | **Composition no.** | **Nozzle** | **Wind speed /mph** | **Mean average** | **Standard deviation** |
|---|---|---|---|---|---|
| **5.1** | 1 | TeeJet 40 03 E | 0 | 0.92 | 1 |
| **5.2** | 8 | | | 0.86 | 0.14 |
| **5.3** | 9 | | | 0.80 | 0.16 |
| **5.4** | 1 | | 10 | 0.69 | 0.32 |
| **5.5** | 8 | | | 0.57 | 0.27 |
| **5.6** | 9 | | | 0.52 | 0.30 |
| **5.7** | 1 | Wilger ComboJet MR 40 04 | 0 | 0.80 | 0.35 |
| **5.8** | 9 | | | 0.58 | 0.38 |

The tests were then repeated using the alternative nozzles tested in Example 2, and the results are shown in Table 8 above. Compositions 8 and 9 performed worse than the Control Composition 1 through the same nozzles and at the same wind speeds.

In Examples 4 and 5, an expected drop in uniformity was observed when a crosswind was present. For Compositions 8 and 9, this reduction in uniformity was much greater than the Control Composition 1, indicating that Compositions 8 and 9 have a negative effect for footprint evenness in precision spraying applications.

The present inventors have surprisingly found that Compositions 2 to 7 are effective as adjuvants for improving the uniformity of the spray within a precision spraying system. These compositions are known as commercially available drift reduction adjuvants, but are surprisingly shown to also improve the uniformity across the targeted footprint width of 25cm. This effect has been shown to not be a universal property of drift reduction adjuvants, as shown by the worsening effect of Compositions 8 and 9.

### Example 6 - Microdrift tests

Further tests were carried out to investigate the effect of the adjuvant compositions on microdrift of the agricultural sprays.

The test procedure of Example 1 was followed, but the deposition on the region outside of the target was also analysed. As shown in table 9 below, a target was divided into 5cm x 5cm squares, with a footprint of 25cm targeted from a single nozzle (greyed out squares). The amount of the agricultural spray deposited in the 15cm region immediately adjacent to the target footprint was also measured i.e. in the 3 squares marked A to C in Table 9 below. The arrow shows the direction of travel of the nozzle.

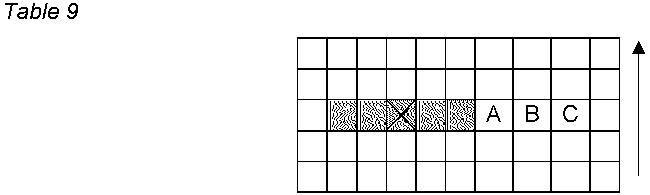

A first series of tests was carried out using Compositions 1-2 and 6-9 and using the same nozzle used in Example 1, a coarse pre-orifice nozzle having a spray angle of 40° and a flow rate of 0.3 gallons per hour at 40psi.

Table 10 shows the results from a test with no crosswind applied - footprint total shows the measured % of the agricultural spray which was deposited across the 25cm footprint (i.e. the 5 greyed-out squares in table 9); footprint centre shows the deposition rate in the central square marked with an X in Table 9. Columns A-C show the deposition rates in the three squares adjacent to the targeted footprint - a high deposition in squares A to C indicates drift of the agricultural spray away from the targeted footprint.

**Table 10**

| **Example no.** | **Composition no.** | **Nozzle** | **Wind speed /mph** | **% Deposition** | | | | |
|---|---|---|---|---|---|---|---|---|
| | | | | **Footprint total** | **Footprint centre** | **A** | **B** | **C** |
| **6.1** | 1 | Agrotop SpotFan 40 03 | 0 | 91.50 | 22.55 | 6.78 | 1.62 | 0.09 |
| **6.2** | 2 | | | 92.70 | 21.01 | 5.76 | 1.32 | 0.22 |
| **6.3** | 5 | | | 95.14 | 21.75 | 4.31 | 0.47 | 0.08 |
| **6.4** | 6 | | | - | - | - | - | - |
| **6.5** | 7 | | | 93.74 | 21.15 | 5.23 | 0.82 | 0.21 |
| **6.6** | 8 | | | 96.38 | 26.52 | 2.60 | 0.70 | 0.32 |
| **6.7** | 9 | | | 95.92 | 35.25 | 2.74 | 0.84 | 0.50 |

The tests were then repeated with a 10 mph crosswind, as shown in Table 11.

**Table 11**

| **Example no.** | **Composition no.** | **Nozzle** | **Wind speed /mph** | **% Deposition** | | | | |
|---|---|---|---|---|---|---|---|---|
| | | | | **Footprint total** | **Footprint centre** | **A** | **B** | **C** |
| **6.8** | 1 | Agrotop SpotFan 40 03 | 10 | 83.57 | 24.10 | 11.01 | 4.01 | 1.41 |
| **6.9** | 2 | | | 85.51 | 23.88 | 9.60 | 3.56 | 1.33 |
| **6.10** | 5 | | | 90.41 | 23.02 | 7.21 | 1.09 | 1.29 |
| **6.11** | 6 | | | - | - | - | - | - |
| **6.12** | 7 | | | 87.63 | 21.15 | 8.81 | 2.54 | 1.02 |
| **6.13** | 8 | | | 87.56 | 23.06 | 8.22 | 2.93 | 1.28 |
| **6.14** | 9 | | | 91.78 | 25.15 | 5.16 | 2.03 | 1.03 |

Composition 1 comprises only water and thus acts as a control reference for the rest of the tests. As expected, the presence of a crosswind caused a significant reduction in the agricultural spray hitting the targeted footprint, indicating an increase in drift of the spray from the nozzle.

Composition 2 shows a modest improvement over Control Composition 1 in the absence of wind as indicated by a higher percentage of the total deposit in the targeted area (92.7% compared to 91.5 %) and less off target movement i.e. deposition in squares A-C outside of the targeted area. This modest improvement is maintained in the presence of the 10 mph side wind, highlighting the ability of Composition 2 to reduce the microdrift of an agricultural spray. Composition 5 is the same as Composition 2, but at a higher concentration, and shows a marked improvement in performance over the Control Composition 1. With no crosswind, less than 5% of the spray lands outside of the target area, with the majority of this microdrift landing in the first 5 cm outside of the target area (i.e. in square A). When a 10 mph crosswind was applied, the improvement over Composition 1 was still observed.

The majority of the microdrift, again, landed in the first 5 cm square outside of the target area. These results indicated the ability of Composition 5 to reduce the microdrift of a spray plume when spot spraying.

Composition 7 also showed an improvement over the control by reducing the degree of microdrift of an agricultural spray both in the presence and absence of wind. Firstly, in the absence of crosswind, the total deposition in the target footprint is slightly higher than the control, and what off target deposit that was observed predominantly fell in the first 5cm (square A) outside of the target footprint. Secondly, when the 10 mph crosswind was applied, the total deposition in the target area dropped by only approximately 6% - indicating that the agricultural spray was only minimally affected by the high crosswind speed when the adjuvant material is included.

Composition 8 and Composition 9 both had superior performance in minimizing microdrift when compared to the control Composition 1. In the absence of wind, the total deposition in the targeted footprint were the highest recorded from this nozzle, with negligible spray amounts deposited in the three squares outside of the target footprint. When a crosswind was applied, both treatments performed remarkably well in maintaining the spray in the target area and minimising drift.

The above results show the suitability of compositions 2, 5 and 7-9 as drift reduction adjuvants. The results are somewhat surprising, since Compositions 8 and 9 were shown in Examples 4 and 5 to significantly worsen the uniformity of an agricultural spray (i.e. within the 25cm wide target footprint).

### Example 7 - Further microdrift tests

The test of Example 6 was then repeated through an alternative nozzle, the TeeJet 40 03E, which is an even flat fan nozzle with a medium spray classification at 3 bar. As in Example 1, the nozzle has a spray angle of 40° and a flow rate of 0.3 gallons per hour (at 40psi).

**Table 12**

| **Example no.** | **Composition no.** | **Nozzle** | **Wind speed /mph** | **% Deposition** | | | | |
|---|---|---|---|---|---|---|---|---|
| | | | | **Footprint total** | **Footprint centre** | **A** | **B** | **C** |
| **7.1** | 1 | TeeJet 40 03E | 0 | 89.38 | 17.07 | 8.68 | 1.33 | 0.61 |
| **7.2** | 2 | | | 91.92 | 18.87 | 6.67 | 0.89 | 0.53 |
| **7.3** | 5 | | | 89.95 | 20.51 | 8.56 | 1.16 | 0.33 |
| **7.4** | 6 | | | 92.10 | 18.86 | 8.44 | 1.17 | 0.65 |
| **7.5** | 7 | | | 91.19 | 19.91 | 7.37 | 0.93 | 0.51 |
| **7.6** | 8 | | | 94.85 | 15.66 | 3.67 | 0.88 | 0.60 |
| **7.7** | 9 | | | 95.89 | 13.82 | 3.08 | 0.72 | 0.32 |

**Table 13**

| **Example no.** | **Composition no.** | **Nozzle** | **Wind speed /mph** | **% Deposition** | | | | |
|---|---|---|---|---|---|---|---|---|
| | | | | **Footprint total** | **Footprint centre** | **A** | **B** | **C** |
| **7.8** | 1 | TeeJet 40 03E | 10 | 81.06 | 17.69 | 14.24 | 3.49 | 1.21 |
| **7.9** | 2 | | | 86.41 | 18.79 | 10.48 | 2.23 | 0.88 |
| **7.10** | 5 | | | 83.15 | 19.41 | 9.92 | 5.77 | 1.16 |
| **7.11** | 6 | | | 83.70 | 17.56 | 12.25 | 4.04 | 1.45 |
| **7.12** | 7 | | | 84.45 | 17.96 | 11.88 | 2.78 | 0.90 |
| **7.13** | 8 | | | 84.66 | 16.17 | 10.85 | 2.90 | 1.59 |
| **7.14** | 9 | | | 85.07 | 17.34 | 10.89 | 2.64 | 1.40 |

As previously, the microdrift behaviour was benchmarked with water (Composition 1). In the absence of wind, square A outside of the targeted footprint had a percentage deposition of approximately half the rate that hit the targeted footprint centre. When a 10 mph crosswind was applied, the 15cm wide region (squares A to C) outside of the targeted spray footprint showed a much higher deposition rate. Square A had a deposition of 14.24%, which equates to 80% of the amount deposited on the footprint centre, thereby indicating a significant propensity for microdrift. The total deposition on the targeted area also reduced by 8 %pts in the presence of the 10 mph crosswind due to a higher proportion of the spray drifting outside of the targeted area.

Composition 2 shows a reduction in microdrift in comparison to Composition 1. In the absence of the crosswind, there was a higher total deposition on the targeted footprint compared to control Composition 1 and there was a greater amount on the footprint centre. Squares A to C outside of the target footprint also had lower deposition for Composition 2 than Composition 1. In the presence of a 10 mph crosswind, the deposition outside of the target footprint was reduced significantly compared to Composition 1 i.e. the movement of the spray was less extreme for Composition 2 compared to Composition 1.

Composition 5 and Composition 6 are the same as Composition 2 but at a higher concentration, and performed very similarly to each other. In the absence of a crosswind there was a slight reduction in microdrift over Composition 1 - as shown by the total deposition over the targeted footprint increasing and the deposition in the squares A to C outside of the target area decreasing. When a 10mph crosswind was applied, the drop in total deposition on the targeted footprint decreased less than for Composition 1, showing a reduction microdrift. The deposition on the footprint centre was nearly unchanged in the presence of the crosswind for Composition 5. The results for Compositions 5 and 6 were similar to that of Composition 2, and without wishing to be bound by theory, suggests that the drift reduction affects are not directly correlated to the concentration of these compositions.

Composition 7 showed a marked improvement over Composition 1 both in the absence of wind, and with a 10 mph crosswind. When a 10 mph crosswind was applied, Composition 7 maintained a higher total deposition in the target footprint and thus lower deposition outside of the target area.

Composition 8 and Composition 9 both also showed improvements in minimizing microdrift - in the absence of crosswind both treatments had a higher total deposition over the target footprint compared to Control Composition 1 and a large reduction in the deposition outside of the target area. With a 10 mph crosswind applied there was observed less microdrift compared to Composition 1 under the same conditions, as evidenced by the lower deposition rates in squares A to C.

The above results show the suitability of compositions 2, and 5-9 as drift reduction adjuvants. The drift reduction properties are observed through both agricultural nozzles tested i.e. in Examples 6 and 7. The results are somewhat surprising, since Compositions 8 and 9 were shown in Examples 4 and 5 to significantly worsen the uniformity of an agricultural spray (i.e. within the 25cm wide target footprint). Without wishing to be bound by theory, these results indicate that the spray uniformity is independent of drift of the spray. It is thus surprising that the compositions claimed herein showed significant improvements in spray uniformity, since this cannot be extrapolated from drift reduction data.

The invention is defined by the claims.

## Claims

1. A method for improving uniformity of an agricultural spray, the method comprising:
spraying the agricultural spray through an agricultural spray nozzle; wherein the agricultural spray comprises:
an active ingredient,
an adjuvant composition, and
a carrier fluid; and
wherein the agricultural spray nozzle has a spray angle of 65° or less.

2. The method according to claim 1, wherein the agricultural spray nozzle is selected from the group comprising: flat fan nozzles including standard, even, and deflector nozzles; pre-orifice nozzles; hollow cone nozzles; full cone nozzles; and air induction (Venturi) nozzles.

3. The method according to any one of the preceding claims, wherein the agricultural spray nozzle has a spray angle of 45° or less.

4. The method according to any one of the preceding claims, wherein spraying the agricultural spray comprises non-broadcast spraying.

5. The method according to claim 4, wherein spraying the agricultural spray comprises banded or spot application of the agricultural spray.

6. The method according to claim 5, wherein the spot application comprises 1 metre or less in length.

7. The method according to any one of the preceding claims, wherein the agricultural spray comprises 0.01-1% w/w of the adjuvant composition.

8. The method according to any one of the preceding claims, wherein the adjuvant composition comprises:
20-50% w/w of a mixture comprising an ethoxylated alcohol and glycerol polyethyleneglycol ricinoleate; and
50-80% w/w of unsaturated fatty acids.

9. The method according to claim 8, wherein the ethoxylated alcohol is C₆₋₁₄EO₁₋₁₀.

10. The method according to any one of claims 1 to 7, wherein the adjuvant composition comprises:
40-60% w/w of soybean phospholipids;
15-35% w/w of ethoxylated alcohol; and
15-35% w/w of unsaturated fatty acids.

11. The method according to claim 10, wherein the ethoxylated alcohol is C₆₋₁₄EO₁₋₄.

12. The method according to any one of claims 10 to 11, wherein the soybean phospholipids comprise phosphatidylcholine and triglycerides.

13. The method according to any one of claims 10 to 12, wherein the unsaturated fatty acids comprise an esterified vegetable oil.

14. The method according to any one of the preceding claims, wherein the agricultural spray comprises 0.001 to 2 wt% of the active ingredient, and wherein the active ingredient is a pesticidal composition.

15. The method according to claim 14, wherein the pesticidal composition comprises one or more of glufosinate, glufosinate ammonium, and clethodim.
